(19) Europäisches Patentamt
European Patent Office
Office européen des brevets

(11) Publication number: **0 018 780**
**B1**

(12) **EUROPEAN PATENT SPECIFICATION**

(45) Date of publication of patent specification: **03.08.83**

(21) Application number: **80301329.1**

(22) Date of filing: **24.04.80**

(51) Int. Cl.³: **C 08 G 79/10**, C 07 F 5/06, C 08 L 67/00, C 08 L 101/00, C 08 K 5/05 //(C08K5/05, C09F9/00)

(54) **An aluminium complex, method for its preparation and air-drying compositions containing it.**

(30) Priority: **30.04.79 GB 7915027**

(43) Date of publication of application:
**12.11.80 Bulletin 80/23**

(45) Publication of the grant of the patent:
**03.08.83 Bulletin 83/31**

(84) Designated Contracting States:
**BE DE FR GB IT NL SE**

(56) References cited:
**AT - B - 193 393**
**CH - A - 332 128**
**DE - A - 1 420 505**
**GB - A - 907 558**
**US - A - 2 744 074**
**US - A - 2 979 497**

(73) Proprietor: **Manchem Limited**
**Ashton New Road**
**Manchester M11 4AT (GB)**

(72) Inventor: **Turner, John Harry Wallice**
**Cornerstones Cockyard Chapel-en-le-Frith**
**via Stockport, Cheshire (GB)**

(74) Representative: **Kyle, Diana et al,**
**ELKINGTON AND FIFE High Holborn House 52/54**
**High Holborn**
**London WCIV 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 018 780 B1

# An aluminium complex, method for its preparation and air-drying compositions containing it.

This invention relates to aluminium complexes and to air drying compositions containing them, in particular surface coatings based on synthetic resins.

It is known that aluminium compounds can function as co-ordination driers in paints and they have been used as replacements for lead driers because of their relatively low toxicity. The preferred aluminium compounds are the alkoxides such as aluminium isopropoxide, higher alkoxides, substituted alkoxides, and the oxo-aluminium compounds obtained by reacting aluminium alkoxides with water and optionally with mono-carboxylic acids, alcohols or phenols in the manner disclosed in British Patent Specification No. 825,878. However, the usefulness of these aluminium compounds is limited by their excessive reactivity with free carboxyl, hydroperoxyl, hydroxyl and methylene groups which may be available in the resin medium. Because of this reactivity, association occurs and tends to increase the molecular weight and hence the viscosity of the medium. This has to be countered by dilution with more solvent but the resulting decrease in the solids content causes a diminution in the binding properties and durability of the medium. Therefore, the successful use of such aluminium compounds as driers, has been mainly limited to applications such as in printing inks and surface coating applications in which a high viscosity of low solids content is not a disadvantage.

British Patent Specification No. 1,462,610 discloses a method for achieving the desirable characteristic of storage stability in air-drying compositions comprising an aluminium compound and a reactive paint medium in a mixture ratio which would normally prove to be unstable and cause gelation in the container before being applied to a surface. According to Specification No.1,462,610, this is achieved by adding at least 1 mole, per mole of the aluminium compound, of an organic monohydroxy compound of the formula $R^1OH$ where $R^1$ is a substituted or unsubstituted alkyl or cycloalkyl group in which the alkyl or cycloalkyl residue contains from 1—6 carbon atoms.

Although the addition of the hydroxy compound as defined above is effective in providing stable surface coating compositions, it suffers from the disadvantages that high contents of expensive materials are required in order to stabilize the composites formed by reaction of the aluminium compounds with the resins and some of these materials are not suitable for specific applications because of their low flash points or relatively high toxicities.

The stabilising action of the hydroxy compound is thought to be due to its ability to suppress substitution of alkoxide groups in the aluminium compounds by hydroxyl groups in the resin. Oxo-aluminium compounds however, for example are disclosed in British Patent Specifications Nos. 825,878 and 907,558, are resistant to attack by the weak hydroxyl groups on alkyd resins, but they do react slowly with the stronger carboxyl groups available. These reactions result in the undesirable formation of hydroxy-aluminium di-soaps which cause surface coating media to thicken on storage.

We have now found oxo-aluminium complexes which are suitable for use as co-ordination driers in surface coatings based on synthetic resins which are substantially free from the attendant disadvantages just described.

Accordingly, the present invention provides an oxo-aluminium complex of the general formula (I):

$$(\text{—}O_r\text{—}\underset{\underset{OR_q}{|}}{Al}\text{—}X_p)_n \qquad (I)$$

wherein —O— is an oxygen atom bridging two aluminium atoms;
—OR is an alkoxy group where R is an optionally substituted alkyl group containing from 1 to 4 carbon atoms or an alkoxy alkyl group containing 4 to 6 carbon atoms;
—X is a substituent derived by elimination of a hydrogen atom from an enolate or a mixture of substituents comprising at least one substituent derived by elimination of a hydrogen atom from an enolate and one or more substituents derived by elimination of a hydrogen atom from an alcohol containing more than 4 carbon atoms, a phenol, a carboxylic acid, a mono-ester of a dicarboxylic acid or a di-ester of a tri-carboxylic acid or a hydroperoxy compound; *p* and *q* are independently numbers greater than 0 with the proviso that *p* + *q* is less than 3; *r* is a number represented by the relationship

$$\frac{3-p-q}{2} \text{ ; and}$$

*n* is a number of 2 or more.

The invention also provides an air-drying composition comprising a synthetic resin such as alkyd resin and an aluminium complex or composition as just defined.

The substituent or substituents represented by X are selected in order that they may contribute valuable additional properties to the surface coatings in which the complexes of the invention are used. For example the substituents may be beneficial in providing greater stability, lower viscosity/higher

solids, more precise control of "wet edge" and hard dry time, controlled water absorption/water vapour permeability, improved pigment wetting, improved mechanical properties, increased durability and means of inhibiting ferreous metal corrosion.

According to the invention X represents a substituent derived by elimination of a hydrogen atom from an enolate or a mixture of substituents at least one of which is derived by elimination of a hydrogen atom from an enolate.

Typical examples of compounds from which the substituents represented by X can be derived to enable the aluminium complexes or compositions of the invention to be used in a wide range of surface coatings, which include air drying and low bake industrial coatings of all types, are butoxy ethanol, cyclohexanol, ethyl hexanol, Synperonic (Trade Mark) NX (a monoalkyl phenyl ether of a polyethylene glycol), Cirrasol (Trade Mark) ALN—WF (the monocetyl ether of a polyethylene glycol), glycol mono esters, glycerol or other triol diesters, phenol, p-tert butyl phenol, *o*-phenyl phenol, 2,6-di-tert-butyl-4-methyl phenol, pentachlorphenol, anacardol, monohydric phenols in which one or more hydrogen atoms in the benzene ring are replaced by alkyl, aryl, alkoxy, aryloxy, halide or nitro groups; saturated and unsaturated fatty acids, other primary, secondary and tertiary aliphatic acids, e.g. methacrylic, neo-pentanoic, Versatic (Trade Mark), ethyl hexoic; aromatic acids, e.g. benzoic, p-nitro benzoic; mono esters of dicarboxylic acids, e.g. acid monobutyl maleate, acid monoethyl phthalate, acid monoixopropyl dodecyl succinate; ethyl and higher esters of acetoacetic acid, acetyl acetone and other $\beta$-di-ketones, diethyl malonate and other malonic esters.

The substituent —OR is preferably derived from an alcohol where R is an alkyl group containing from 1 to 4 carbon atoms or an alkoxy alkyl group containing from 4 to 6 carbon atoms. Preferred alcohols are isopropanol, 2-butanol and ethoxy ethanol.

The complex of the invention may be manufactured by, in a first stage, reacting an aluminium alkoxide with the desired compound or compounds from which the substituent X is derived and, in a second stage, condensing the resulting substituent aluminium intermediate compound by reaction with a deficiency of water, i.e. less than 1 mole of water per 2 alkoxide radicals.

The alcohol by-product is removed by distillation. The water is preferably added to the reaction mixture as a water/alcohol solution or as water vapour.

In another aspect the complex may be manufactured by, in the second stage, condensing the substituted aluminium intermediate compound by reaction with a deficiency of a carboxylic acid i.e. less than 1 mole of the carboxylic acid for every 2 alkoxide radicals. The by-product alcohol displaced by the carboxylic acid is first removed by distillation to achieve the higher temperature desirable for the condensation reaction in which the substituted acyloxide and part of the residual alkoxide are released as ester and the >Al—O—Al< compound is formed. In a preferred embodiment the carboxylic acid used is one in which the available alkoxide condenses to form a volatile ester which can be removed readily by distillation.

The method of manufacture of the complexes is further illustrated by reference to the following Examples.

Example 1

| | |
|---|---|
| Aluminium tri-ethyl ethoxide | 1470g |
| Containing ethoxyethanol | 80g |
| Ethyl acetoacetate | 650g |
| Solution (A) { Water | 72g |
| Solution (A) { Ethoxyethanol | 72g |

The solution of aluminium tri-ethoxyethoxide in ethoxyethanol was charged to a flask fitted with a stirrer, thermometer and condenser for refluxing and distillation. Stirring was commenced and the ethyl acetoacetate was added in a steady stream over a period of 20 minutes. The exothermic reaction during the addition caused the temperature in the flask to rise to 94°C. Cooling water was applied to lower the temperature to 24°C. The water and ethoxy ethanol, solution (A), was then stirred in over a period of 30 minutes. After the addition of solution (A) the apparatus was arranged for distillation and heat was applied to the flask. Distillation commenced at 80°C and was continued at atmospheric pressure until a temperature of 160°C was reached. A vacuum was then applied until distillation was completed. The product in the flask was diluted with white spirit in an amount sufficient for the diluted solution to contain 8% by weight aluminium (as the metal).

Example 2

| | |
|---|---|
| Aluminium tri-isopropoxide | 1020g |
| Ethyl acetoacetate | 650g |
| Solution (A) { Water | 72g |
| Solution (A) { Isopropanol | 72g |

The process employed was similar to that described in Example 1 except that maximum distillation temperature reached was 150°C and no vacuum was applied. The product was diluted to 8% aluminium with white spirit.

Example 2a

The product of Example 2 was prepared according to the process employed in Example 2 but was diluted to 8% aluminium content with di-octyl maleate.

Example 3 (Comparative)

| | |
|---|---|
| Aluminium tri-isopropoxide | 1020g |
| Ethyl acetoacetate | 650g |
| Solution (A) | |
| { Water | 90g |
| { Isopropanol | 90g |

The process employed was the same as described in Example 2. The product was diluted to 8% aluminium with white spirit.

Example 4

The product of Example 3 was prepared according to the process employed in Example 3 but with an addition at 150°C to 200g of aluminium diethoxy ethoxide monoethyl acetoacetate + ethoxy ethanol — molar equivalent. This was followed by heating for a further hour at 150°C during which there was removed by distillation 39g of ethoxy ethanol. The resulting condensation product was then diluted with white spirit to an 8% aluminium content.

Example 5

| | |
|---|---|
| Aluminium tri-isopropoxide | 1020g |
| Ethyl acetoacetate | 325g |
| Versatic acid | 438g |
| Solution (A) | |
| { Water | 72g |
| { Isopropanol | 72g |

The process employed was similar to that described in Example 2 with the exception that Solution (A) was stirred into the reaction mixture at a temperature of 70—80°C. The Versatic acid was added after the addition of ethyl acetoacetate. The yield was 1110g of product having an aluminium content of 12.1%.

Example 6

| | |
|---|---|
| Aluminium tri-isopropoxide | 1020g |
| Ethyl acetoacetate | 325g |
| Linoleic acid | 725g |
| Solution (A) | |
| { Water | 81g |
| { Isopropanol | 81g |

The process employed was the same as described in Example 5. Linoleic acid was introduced after the addition of the ethyl acetoacetate. The product was diluted to 6% Al content with white spirit.

Example 7

| | |
|---|---|
| Aluminium tri-isopropoxide | 204g |
| Ethyl acetoacetate | 65g |
| { Synperonic NX | 295g |
| { Water | 14.4g |

The process employed was the same as described in Example 2, with the Synperonic NX being introduced after the addition of the ethyl acetoacetate.

When the oxo-aluminium complexes of the invention are added to a synthetic resin solution we have found that the alkoxy group (—$OR_q$) on the complex reacts preferentially by direct addition with the available carboxyl groups on the resin and effectively reduces the acid value of the resin.

As previously discussed, with oxo-aluminium compounds which do not contain alkoxide substituents, reaction with carboxyl groups, which may be available on resins to which the oxo-aluminium compound is added, results in the carboxyl groups attaching the oxo-linkage with the formation of hydroxy aluminium di-soaps. This contributes to storage instability of surface coatings manufactured using these compounds. In contrast, with the oxo-aluminium complexes of the present invention, the carboxyl groups on the resin are effectively neutralised by the alkoxy group of the oxo-aluminium complexes thereby leaving the remaining active groups free to promote the drying mechanism through reaction with hydroperoxides and other groups resulting from the oxidation process on applying the coating to a surface.

It is important that sufficient alkoxy groups are available from the oxo-aluminium complex to neutralise substantially all the free carboxyl groups on the resin.

According to a particular embodiment of the invention, which is especially useful when resins of high initial acid value are used, the acid value of the resin can be reduced prior to adding the oxo-aluminium complexes of the invention. This is preferably achieved by esterifying the free carboxyl groups by a process of direct addition using an oxirane compound. Suitable oxirane compounds include ethylene oxide, propylene oxide, epichlorohydrin, methyl glycidyl ether, phenyl glycidyl ether, glycidyl ethyl hexoate, glycidyl Versatate, glycidyl hydroxide and epoxidised fatty esters.

To reduce acid value one or more of these oxirane compounds is added to the resin solution in stoichiometric excess over the acid value of the resin and then heated under reflux conditions for a period of time which varies with the compound and with the excess used.

Before addition of the oxo-aluminium complexes to a resin medium the product concentrate should be diluted at the end of the condensation stage to give the maximum viscosity consistent with easy handling of the material. This can be achieved using volatile solvents such as white spirit or non-volatile solvents, which are particularly useful in applications where a medium having a high non-volatile content is required. They can also contribute towards the properties of the applied film. Particularly preferred non-volatile solvents include di-octyl maleate, di-butyl phthalate, di-nonyl fumarate, vinyl stearate, triphenyl phosphate and chlorinated paraffins available under the Trade Mark Cereclor.

It is preferable, though not essential, to add the resin solutions to the complexes of the invention. If the resin solution is of high viscosity it may be preferable to reduce its viscosity by heating it before addition to the complex to improve miscibility and expedite the homogenisation of the mix to preclude any localised cross-linking reactions which may occur where there is a deficiency of aluminium.

Table 1 shows the improved drying performances obtained when the complexes of Examples 1—8 were used to catalyse the drying of the commercially available alkyd resin medium Synolac 29W (Synolac is a Trade Mark). Before addition of the complexes, the medium was diluted with white spirit to 62% non-volatile content and 0.06% cobalt was added as cobalt naphthenate based on the weight of non-volatile alkyd. The tests were carried out three days after preparation of the drying media.

TABLE 1

| Example | Al %* | Viscosity (poises) | |
|---|---|---|---|
| | | (24 hrs) | (28 days) |
| 1 | 1 | 2.5 | 3.9 |
| 1 | 6 | 1.2 | 1.6 |
| 2 | 1 | 3.2 | 4.0 |
| 2 | 6 | 1.6 | 2.1 |
| 4 | 1 | 3.2 | 4.2 |
| 4 | 6 | 1.7 | 2.3 |
| 5 | 1 | 2.2 | 4.0 |
| 5 | 6 | 1.0 | 1.4 |
| 6 | 1 | 3.4 | 4.0 |
| 6 | 6 | 1.4 | 1.8 |
| 7 | 1 | 2.5 | 2.7 |
| Standard<br>Co 0.06<br>Pb 0.5<br>Ca 0.25 | – | 3.4 | 4.9 |
| 3 (Comparative) | 1 | 3.6 | 9.6 |
| 3 (Comparative) | 6 | 3.1 | 16.2 |

TABLE 1 (Continued)

| Example | Al %* | Drying Rate (Beck Koller) | | | | Condition of film |
|---|---|---|---|---|---|---|
| | | 1 | 2 | 3 | 4 | |
| 1 | 1 | 1.9 | 2.8 | 3.8 | 4.8 | Hard and glossy |
| 1 | 6 | 2.3 | 3.4 | 4.4 | 7.7 | Rather soft |
| 2 | 1 | 1.1 | 2.1 | 2.5 | 2.9 | Hard and glossy |
| 2 | 6 | 0.6 | 1.7 | 2.7 | 3.8 | Hard and glossy |
| 4 | 1 | 1.4 | 2.4 | 3.4 | 4.4 | Hard and glossy |
| 4 | 6 | 1.8 | 2.9 | 3.9 | 4.8 | Hard and glossy |
| 5 | 1 | 1.1 | 2.1 | 2.6 | 3.7 | Hard and glossy |
| 5 | 6 | 1.7 | 2.3 | 2.5 | 3.3 | Hard and glossy |
| 6 | 1 | 1.9 | 3.2 | 3.8 | 6.8 | Hard and glossy |
| 6 | 6 | 2.0 | 3.3 | 4.7 | 7.8 | Hard and glossy |
| 7 | 1 | 2.2 | 4.2 | 11.5 | 16.2 | Slight surface tack |
| Standard<br>Co 0.06<br>Pb 0.5<br>Ca 0.25 | | 2.4 | 5.4 | 8.8 | 13.4 | Persistent surface bite*** |
| 3 (Comparative) | 1 | 1.8 | 2.4 | 3.3 | 3.8 | Hard and glossy |
| 3 (Comparative) | 6 | 1.5 | 2.4 | 3.6 | 4.0 | Hard and glossy |

* Al % based on non-volatile content of Synolac 29W.

*** "Bite" means retention of a tendency to adhere when pressure is applied to the coating by the hand.

Table 2 shows the improved storage stability of air drying compositions prepared according to the invention using Synolac 29W when compared with a typical example of an air drying composition disclosed in British Patent Specification No. 1,462,610 containing aluminium diethoxy ethoxide monoethyl acetoacetate + ethoxy ethanol — molar equivalent, and the product of Comparative Example 3.

TABLE 2

| Example | Al %* | Viscosity (poises) at 21°C after (days) | | | | | |
|---|---|---|---|---|---|---|---|
| | | 1 | 10 | 17 | 24 | 31 | 42 |
| Comparative | 1 | 3.6 | 5.1 | 6.1 | 6.6 | 10.0 | 13.5 |
| | 6 | 2.1 | 4.4 | 7.0 | 10.7 | 25 | gelled |
| 1 | 1 | 2.5 | 2.6 | 2.8 | 3.4 | 4.0 | 5.0 |
| | 6 | 1.2 | 1.3 | 1.4 | 1.6 | 1.6 | 1.8 |
| 2 | 1 | 3.2 | 3.0 | 3.6 | 3.8 | 4.2 | 5.0 |
| | 6 | 1.6 | 1.8 | 1.8 | 2.0 | 2.1 | 2.5 |
| 4 | 1 | 3.2 | 3.3 | 3.6 | 3.9 | 4.5 | 5.6 |
| | 6 | 1.7 | 1.7 | 1.9 | 2.2 | 2.3 | 2.6 |
| 5 | 1 | 2.2 | 2.9 | 3.4 | 3.8 | 5.0 | 7.5 |
| | 6 | 1.0 | 1.0 | 1.3 | 1.4 | 2.2 | 2.2 |
| 6 | 1 | 3.4 | 3.2 | 3.4 | 3.8 | 4.5 | 5.8 |
| | 6 | 1.4 | 1.5 | 1.5 | 1.8 | 1.8 | 2.0 |
| 3 (Comparative) | 1 | 3.6 | 5.4 | 6.1 | 8.2 | 10.4 | 70.0 |
| | 6 | 3.1 | 6.2 | 10.4 | 15.8 | 22.6 | slack gel |

* Al % based on non-volatile content of Synolac 29W.

## Claims

1. An oxo-aluminium complex of the general formula (I):

$$(\text{—}O_r\text{—}\underset{\displaystyle OR_q}{\underset{|}{Al}}\text{—}X_p)_n \qquad (I)$$

wherein —O— is an oxygen atom bridging two aluminium atoms;
—OR is an alkoxy group where R is an optionally substituted alkyl group containing from 1 to 4 carbon atoms or an alkoxy alkyl group containing 4 to 6 carbon atoms;
—X is a substituent derived by elimination of a hydrogen atom from an enolate or a mixture of substituents comprising at least one substituent derived by elimination of a hgydrogen atom from an enolate and one or more substituents derived by elimination of a hydrogen atom from an alcohol containing more than 4 carbon atoms, a phenol, a carboxylic acid, a mono-ester of a dicarboxylic acid or a di-ester of a tri-carboxylic acid or a hydroperoxy compound; $p + q$ are independently numbers greater than 0 with the proviso that $p + q$ is less than 3;
$r$ is a number represented by the relationship

$$\frac{3-p-q}{2}\ ;\text{ and}$$

$n$ is a number of 2 or more.

2. A method of preparing an oxo-aluminium complex according to claim 1, which comprises reacting, in a first stage, at least one aluminium alkoxide with at least one enolate and optionally with one or more compounds selected from alcohols containing more than 4 carbon atoms, phenols, carboxylic acids, mono-esters of dicarboxylic acids, di-esters of tri-carboxylic acids and hydroperoxy compounds, and in a second stage, condensing the resulting substituted aluminium intermediate compound by reaction with a carboxylic acid or with water in a proportion of less than 1 mole of water or carboxylic acid per 2 moles of alkoxide radicals.

3. A method according to claim 2, wherein the carboxylic acid is one in which the available alkoxide condenses to form a volatile ester and wherein the ester is removed by distillation.

4. An air-drying composition comprising an oxo-aluminium complex according to claim 1 and a synthetic resin.

5. An air-drying composition according to claim 4 wherein the synthetic resin is an alkyd resin.

**Patentansprüche**

1. Oxo-Aluminium-Komplex der allgemeinen Formel

$$(-O_r-\underset{\displaystyle OR_q}{\underset{|}{Al}}-X_p)_n \qquad (I)$$

worin bedeuten:
—O— ein zwei Aluminiumatome verbindendes Sauerstoffatom;
—OR eine Alkoxygruppe, worin R eine gegebenenfalls substituierte Alkylgruppe mit 1 bis 4 Kohlenstoffatomen oder eine Alkoxyalkylgruppe mit 4 bis 6 Kohlenstoffatomen darstellt;
—X einen Substituenten, der durch Eliminierung eines Wasserstoffatoms aus einem Enolat abgeleitet ist, oder eine Mischung von Substituenten mit mindestens einem Substituenten, der durch Eliminierung eines Wasserstoffatoms aus einem Enolat abgeleitet ist, und einem oder mehr Substituenten, die durch Eliminierung eines Wasserstoffatoms aus einem Alkoholmit mehr als 4 Kohlenstoffatomen, einem Phenol, einer Carbonsäure, einem Monoester einer Dicarbonsäure oder einem Diester einer Tricarbonsäure oder einer Hydroperoxyverbindung abgeleitet ist;
—$p$ und $q$ unabhängig voneinander Zahlen größer als 0 sind, mit der Maßgabe, daß $p + q$ eine Zahl von weniger als 3 darstellt;
$r$ eine Zahl, repräsentiert durch die Beziehung (3—p—q)/2;
und
$n$ eine Zahl von 2 oder mehr.

2. Verfahren zur Herstellung eines Oxo-Aluminium-Komplexes nach Anspruch 1, das umfaßt die Umsetzung mindestens eines Aluminiumalkoxides mit mindestens einem Enolat und gegebenenfalls mit einer oder mehr Verbindungen, ausgewählt aus Alkoholen mit mehr als 4 Kohlenstoffatomen, Phenolen, Carbonsäuren, Monoestern von Dicarbonsäuren, Diesteren von Tricarbonsäuren und Hydroperoxyverbindungen, in einer ersten Stufe und die Kondensation der dabei erhaltenen substituierten Aluminiumzwischenproduktverbindung durch Umsetzung mit einer Carbonsäure oder mit Wasser in einem Mengenanteil von weniger als 1 Mol Wasser oder Carbonsäure auf 2 Mole Alkoxidreste in einer zweiten Stufe.

3. Verfahren nach Anspruch 2, worin die Carbonsäure eine solche ist, bei der das verfügbare Alkoxid kondensiert unter Bildung eines flüchtigen Esters und der Ester durch Destillation entfernt wird.

4. An der Luft trocknende Zusammensetzung, die umfaßt einen Oxo-Aluminium-Komplex nach Anspruch 1 und ein Kunstharz.

5. An der Luft trocknende Zusammensetzung nach Anspruch 4, in der das Kunstharz ein Alkydharz ist.

**Revendications**

1. Un complexe d'oxo-aluminium de formule générale I

$$(-O_r-\underset{\displaystyle OR_q}{\underset{|}{Al}}-X_p)_n \qquad (I)$$

dans laquelle —O— est un atome d'oxygène formant un pont entre deux atomes d'aluminium;
—OR est un groupe alcoxy dans lequel R est un groupe alkyle éventuellement substitué contenant de 1 à 4 atomes de carbone ou un groupe alcoxy-alkyle contenant de 4 à 6 atomes de carbone;
—X est un substituant dérivant, par élimination d'un atome d'hydrogène, d'un énolate, ou un mélange de substituants comprenent au moins un substituant dérivant, par élimination d'un atome d'hydrogène, d'un énolate, et un ou plusieurs substituants dérivant, par élimination d'un atome d'hydrogène, d'un

alcool contenant plus de 4 atomes de carbone, d'un phénol, d'un acide carboxylique, d'un mono-ester d'un acide dicarboxylique ou d'un diester d'un acide tricarboxylique ou d'un composé en hydroperoxy; p et q représentent indépendamment, des nombres supérieurs à 0, étant spécifié que la somme p + q est inférieure à 3;
r est un nombre défini par la relation

$$\frac{3-p-q}{2} \quad ; \text{et}$$

n est un nombre égal à 2 ou plus.

2. Un procédé de préparation d'un complexe d'oxo-aluminium selon la revendication 1, qui consiste à faire réagir, dans un premier stade, au moins un alcoolate d'aluminium avec au moins un énolate et facultativement avec un ou plusieurs composés choisis parmi les alcools contenant plus de 4 atomes de carbone, les phénols, les acides carboxyliques, les mono-esters d'acides dicarboxyliques, les diesters d'acides tricarboxyliques et les composés en hydroperoxy et, dans un second stade, à condenser le composé intermédiaire d'aluminium substitué obtenu par réaction avec un acide carboxylique ou avec l'eau en proportion de moins d'1 mole d'eau ou d'acide carboxylique pour 2 moles de radicaux alcoolates.

3. Un procédé selon la revendication 2, dans lequel l'acide carboxylique est un acide dans lequel l'alcoolate disponible se condense avec formation d'un ester volatil et d'ou l'ester est éliminé par distillation.

4. Composition séchant à l'air, comprenant un complexe d'oxo-aluminium selon la revendication 1 et une résine synthétique.

5. Une composition séchant à l'air selon la revendication 4, dans laquelle la résine synthétique est une résine alkyde.